# EUROPÄISCHE PATENTSCHRIFT

(11) **EP 1 272 253 B1**
(45) Veröffentlichungstag und Bekanntmachung des Hinweises auf die Patenterteilung: **07.07.2004**
(21) Anmeldenummer: 01933746.8
(22) Anmeldetag: 23.03.2001
(51) Int. Cl.: B01D 11/02

(54) **VORRICHTUNG ZUR ABTRENNUNG VON ÖLBESTANDTEILEN VON SCHÜTTUNGEN**
DEVICE FOR SEPARATING OIL CONSTITUENTS FROM LOOSE BULK
DISPOSITIF PERMETTANT DE SEPARER LES COMPOSANTES D'HUILE DE REMBLAIS

(30) Priorität: 25.03.2000 DE 10015049
(43) Veröffentlichungstag der Anmeldung: 08.01.2003
(73) Patentinhaber: Minitec Engineering GmbH, 45881 Gelsenkirchen (DE)
(72) Erfinder: HAMMER, Ernst, Ekkehard, 45481 Mülheim (DE); DERTMANN, Volkmar, 45657 Recklinghausen (DE)
(74) Vertreter: Müller, Karl-Ernst, Dr., Dipl.-Ing.
(86) Internationale Anmeldenummer: PCT/EP2001/003359
(87) Internationale Veröffentlichungsnummer: WO 2001/072394

(56) Entgegenhaltungen:
- EP-A- 0 437 295
- DE-A- 19 858 507
- US-A- 4 341 619
- US-A- 4 559 133
- US-A- 5 891 433

## Beschreibung

Die Erfindung betrifft eine Vorrichtung zur Abtrennung von Ölbestandteilen von als Schüttung vorliegenden Materialien wie Schüttgütern, Schrauben, Walzschlämmen und dergleichen, umfassend einen Behälter mit einer oberen Einsatzöffnung für das zu behandelnde Material, die mit einem Verschluss luftdicht abschließbar ist, und mit einer am unteren Ende des Behälters vorgesehenen Einströmöffnung für ein im überkritischen Zustand eingeführtes Destraktionsmittel und mit Anschlüssen für die Ableitung des aus Destraktionsmittel, Wasser und Öl bestehenden Dreistoffgemisches und für die Evakuierung und/oder Flutung des Behälters.

Soweit in der DE 198 58 507 A1 ein Verfahren zur Extraktion von Verunreinigungen aus Schüttungen mittels überkritischer Fluide, unter anderem auch von Ölen aus Schleifschlämmen oder Spänen, beschrieben ist, enthält diese Schrift keine Angaben zur Ausbildung einer dafür geeigneten Vorrichtung.

Aus der US 4 341 619 A sind ein Verfahren und eine dafür geeignete Vorrichtung mit den vorgenannten gattungsgemäßen Merkmalen zur Gewinnung von kohlenstoffhaltigen Materialien aus Teersanden bekannt. Hierbei wird ein Destraktionsmittel im überkritischen Zustand in einen feststehenden Behälter eingeleitet, wobei der Behälter in seinem oberen Bereich eine Öffnung für die Zufuhr der Teersande und seinem unteren Ende eine Einströmöffnung für das Destraktionsmittel aufweist; zusätzlich sind Anschlüsse für die Ableitung der gelösten Kohlenstoffe wie auch der gereinigten Teersande vorhanden.

Auch die US 5 891 433 A offenbart hinsichtlich der Vorrichtung zur Durchführung eines entsprechenden Extraktionsverfahren einen unbewegten Behälter, der zur Behandlung von Fein- und Feinstbestandteilen aufweisenden Materialien mit Siebeinbauten versehen ist.

Der Erfindung liegt die Aufgabe zugrunde, eine zur Abtrennung von Ölbestandteilen von als Schüttung vorliegende Materialien geeignete und im Hinblick auf den Extraktionserfolg verbesserte Vorrichtung anzugeben.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht im einzelnen hierzu vor, dass der Behälter mittels wenigstens eines Schwingantriebes in Bewegung versetzbar und während des Einwirkens des im Überkritischen Zustand zugeführten Destraktionsmittels in Bewegung zu halten ist. Wesentlich ist dabei die Bewegung des Behälters während des Einwirkens des im überkritischen Zustand zugeführten Destraktionsmittels. Mittels einer derartigen Vorrichtung können beispielsweise Schrauben von anhaftenden Ölbestandteilen befreit werden, indem die Schrauben in einen Korb eingefüllt und der Korb in den Behälter eingesetzt wird. Durch Einwirken des Extraktionsmittels wird das an den Schrauben anhaftende Öl von dem Extraktionsmittel aufgenommen und ausgetragen.

Da eine derartige Vorrichtung mit einem Behälter nur einen diskontinuierlichen Betrieb zuläßt, ist nach einem Ausführungsbeispiel der Erfindung zur Einstellung eines quasi kontinuierlichen Betriebes vorgesehen, daß zwei Behälter parallel zueinander angeordnet und mit ihren zugeordneten Anschlüssen zusammengeschaltet sind. Somit ist es möglich, während der Beschickungsphase des einen Behälters bei dem anderen Behälter die Extraktionsphase durchzuführen.

Soweit eine Vorrichtung beispielsweise zur Reinigung von ölhaltigen Schüttgütern eingerichtet sein soll und damit einen kontinuierlichen Betrieb ermöglicht, ist vorgesehen, daß der Behälter an seinem unteren Ende eine Abzugsöffnung für die von den Ölbestandteilen befreiten Materialien, das heißt Schüttgüter, aufweist.

Zur Verbesserung des Reinigungsverhaltens kann nach einem Ausführungsbeispiel vorgesehen sein, daß der Querschnitt des Behälters mittels eines unteren Siebbodens und eines oberen Siebbodens in eine zwischen der oberen Behälterwandung und dem oberen Siebboden angeordnete und an die Einsatzöffnung angeschlossene Verteilzone, eine zwischen dem oberen und dem unteren Siebboden befindliche Trennzone sowie eine zwischen dem unteren Siebboden und der unteren Behälterwandung eingerichtete und an die Einströmöffnung für das im Gegenstrom zugeführte Destraktionsmittel angeschlossene Einströmzone unterteilt und in der Trennzone eine mit Aufschlußkörpern gefüllte Packlage angeordnet ist. Mit einer derart ausgebildeten Vorrichtung ist der Vorteil verbunden, daß zunächst eine Auflockerung und Verteilung des auf dem oberen Siebboden eingebrachten Materials erfolgt. In der Trennzone erfolgt bei Durchtritt der Schüttgüter durch die Aufschlußkörper eine Oberflächenvergrößerung, so daß in der Trennzone eine intensive Durchmischung der aufgeschlossenen Schüttgüter mit dem im Gegenstrom hindurchgeführten Destraktionsmittel erfolgt, wobei das Destraktionsmittel die Wasser- und Ölbestandteile von dem Feststoffrückstand der Schüttgüter löst und in die Fluidphase mitnimmt, während der Feststoffrückstand über die Abzugsöffnung ausgetragen wird.

Dabei hat es sich als zweckmäßig herausgestellt, wenn nach einem Ausführungsbeispiel der Erfindung die in der Packlage angeordneten Aufschlußkörper aus Pallringen bestehen, wobei nach einem Ausführungsbeispiel der Erfindung die Pallringe eine axiale Länge von 15 mm bei einem Durchmesser von 15 mm aufweisen.

Soweit beispielsweise bei der Metallverarbeitung anfallende Walzschlämme, die aus einem Gemisch von Feinzunder, Ölbestandteilen und Wasser bestehen, wobei der Feinzunder eine Korngröße von in der Regel < 40 µm aufweist, aufgearbeitet werden sollen, hat sich eine Ausführung des Behälters als zweckmäßig erwiesen, bei welcher der Behälter geneigt angeordnet und die Einsatzöffnung an seinem oberen Ende und die Abzugsöffnung an seinem unteren Ende angeordnet sind. Die in dem Behälter befindlichen Einbauten mit oberem und unterem Siebboden sind in besonderer Weise derart ausgestaltet, daß die in dem als Verteilplatte ausgebildeten oberen Siebboden angeordneten Durchtrittsöffnungen für das zu behandelnde Material am Fuße von in die Verteilplatte eingebrachten trichterförmig in die Trennzone reichenden Vertiefungen ausgebildet sind. Hierbei kann über die Länge der Verteilzone eine Mehrzahl von in Strömungsrichtung des Materials hintereinanderliegenden Reihen mit jeweils mehreren nebeneinander angeordneten Vertiefungen ausgebildet sein, wobei die in benachbarten Reihen befindlichen Vertiefungen jeweils versetzt zueinander angeordnet sind.

Hinsichtlich der Ausbildung des als Austragsplatte wirkenden unteren Siebbodens ist nach einem Ausführungsbeispiel der Erfindung vorgesehen, daß die Austragsplatte aus treppenartig parallel zueinander in Förderrichtung des Materials angeordneten Einzelplatten gebildet ist und die Einströmöffnungen für das Destraktionsmittel durch die lotrechten Zwischenräume zwischen den Einzelplatten gebildet sind.

Mit den vorbeschriebenen Einbauten ist der in Bewegung versetzte Behälter zweckmäßig als Vibrationsrinne ausgebildet. Auch eine Ausbildung des Behälters als Drehrohr ist jedoch möglich, wenn die Einbauten entsprechend der dann vorgesehenen Drehbewegung des Behälters eingerichtet werden.

Nach einem Ausführungsbeispiel der Erfindung ist der die obere Einsatzöffnung des Behälters abschließende Verschluß als luftdicht abdichtender Schieberverschluß ausgebildet, wobei nach einem Ausführungsbeispiel der Erfindung in einem auf den Behälter aufgesetzten Schiebergehäuse eine mittels eines Antriebes verschiebbare Schieberplatte geführt ist. Wegen des in dem Behälter herrschenden, in den Behandlungsphasen unterschiedlichen Drucks kann die Schieberplatte in dem Schiebergehäuse senkrecht zu ihrer Verschieberichtung beweglich angeordnet sein.

Es kann vorgesehen sein, daß an ihrer der Einsatzöffnung abgewandten Fläche die Schieberplatte mittels einer Blähdichtung gegen das Schiebergehäuse abdichtbar ist, wobei parallel zur Blähdichtung auch eine Betriebsdichtung angeordnet ist; alternativ kann auch eine die Blähdichtung und die Betriebsdichtung kombinierende einzige Dichtung vorgesehen sein.

Im Hinblick auf die Einschleusung bzw. Ausschleusung des aufzuarbeitenden Materials in den Behälter kann vorgesehen sein, daß der Behälter und das Schiebergehäuse über eine Leitungsverbindung miteinander verbunden sind.

Als Destraktionsmittel kommen nach Ausführungsbeispielen der Erfindung n-Pentan, Propan, Ethan oder CO₂ zum Einsatz.

In der Zeichnung sind Ausführungsbeispiele der Erfindung wiedergegeben, welche nachstehend beschrieben sind. Es zeigen:
- Fig. 1: eine Vorrichtung zur Aufarbeitung von ölbehafteten Materialien in einer schematischen Darstellung einschließlich der für die Verfahrensführung erforderlichen Apparaturen,
- Fig. 2: die Vorrichtung gemäß Figur 1 in einer abgewandelten Ausführungsform,
- Fig. 3: einen für den Behälter gemäß Figuren 1 und 2 geeigneten Schieberverschluß in einer Seitenansicht,
- Fig. 4: eine schematische Seitenansicht einer im Längsschnitt dargestellten abgewandelten Ausführungsform des Behälters,
- Fig. 5: das zum Einsatz des Behälters gemäß Figur 4 gehörige Verfahrensschema.

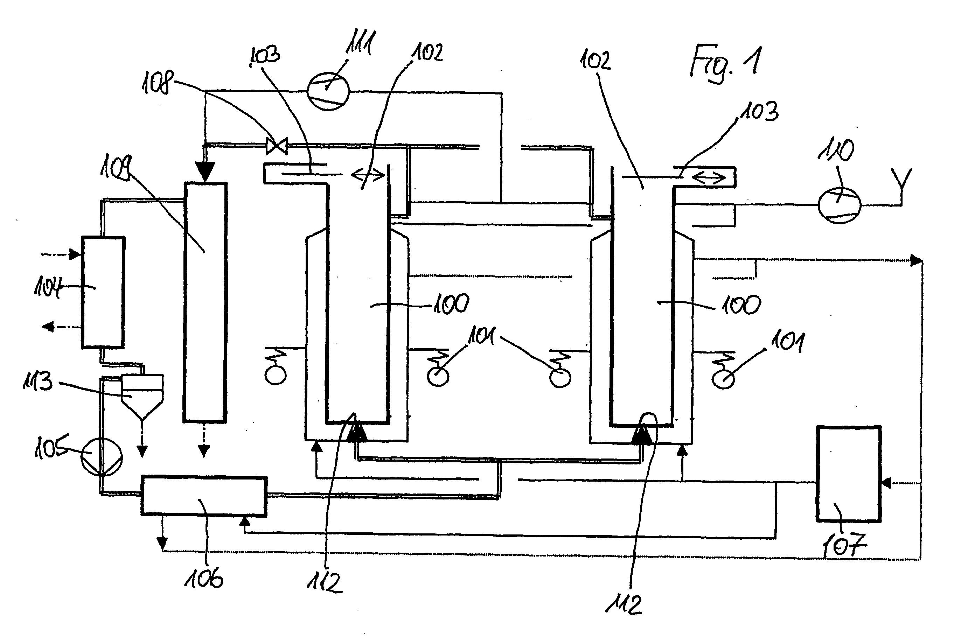

Bei der zunächst in Figur 1 einschließlich der für die Verfahrensführung erforderlichen Apparaturen dargestellten Vorrichtung sind zwei Behälter 100 parallel zueinander angeordnet und mit den erforderlichen Aggregaten derart verschaltet, daß ein quasi kontinuierlicher Betrieb möglich ist. Beiden Behältern 100 ist jeweils ein Schwingantrieb 101 zugeordnet, mittels dessen die Behälter während der Destraktionsphase in Bewegung versetzt bzw. gehalten werden können. Die Behälter haben eine Einsatzöffnung 102 zum Einbringen des aufzuarbeitenden Materials, wobei jede Einsatzöffnung 102 über einen luftdicht arbeitenden Verschluß 103 verschließbar ist.

Ein Destraktionsmittel, beispielsweise Propan ist im Kreislauf durch die Behälter 100 geführt, wobei der Kreislauf ausgehend von einer Hochdruck-Umwälzpumpe 105 beschrieben wird. In dieser Hochdruck-Umwälzpumpe 105 wird das Destraktionsmittel auf den für den überkritischen Zustand erforderlichen Druck gebracht und anschließend in dem Fluiderhitzer 106 auf die für den überkritischen Zustand erforderliche Temperatur erhitzt. Dem Fluiderhitzer 106 wird die erforderliche Wärmemenge von einer Wärmequelle 107 zugeführt, bei der es sich sowohl um einen Kessel als auch um eine Abwärmequelle mit einem Temperaturniveau des Wärme abgebenden Mediums bei etwa 150 bis 250 Grad Celsius handeln kann. Das insoweit in den überkritischen Zustand überführte Destraktionsmittel wird über die Einströmöffnung 112 in den jeweiligen Behälter 100 eingeleitet, in welchem beispielsweise Schrauben mit an diesen anhaftenden Ölbestandteilen eingesetzt sind. Bei hoher Löslichkeit im überkritischen Zustand löst das Destraktionsmittel das an den Schrauben noch anhaftende Wärmebehandlungsöl vollständig auf und transportiert es aus dem jeweiligen Behälter 100 heraus, indem es über ein Entspannungsventil 108 zu einem Ölabscheider 109 fließt. Nach der Entspannung im Entspannungsventil 108 befindet sich das Destraktionsmittel im gasförmigen Zustand und hat damit sein Lösungsvermögen für die Ölanteile verloren, wobei die Ölanteile im Ölabscheider 109 als Flüssigkeit ausfallen und am Boden des Ölabscheiders 109 abgezogen werden können. Das gasförmige Destraktionsmittel verläßt den Ölabscheider 109 im Kopfbereich, um in einem nachgeschalteten Kondensator 104 verflüssigt zu werden, wonach in einem nachgeschalteten Trennapparat 113 eventuell vorhandene Wasseranteile ausgefällt werden. Anschließend wird das Destraktionsmittel in der Hochdruck-Umwälzpumpe 105, wie beschrieben, erneut auf Druck gebracht.

Die beiden Behälter 100 werden wechselweise mit den zu entölenden Schrauben beschickt, wobei die Schrauben mittels eines Einsatzkorbes durch die Einsatzöffnung 102 zu chargieren sind. Für den Chargiervorgang muß der betreffende Behälter 100 von dem Destraktionsmittelkreislauf getrennt und das Destraktionsmittel mittels eines Fluid-Hilfskompressors 111 vollständig evakuiert werden. Die an jeden Behälter 100 zugeschaltete Vakuumpumpe 110 hat die Aufgabe, die mit dem chargierten Korb zwangsläufig in die Behälter 100 gelangte Luft vollständig abzuziehen, bevor der Behälter 100 erneut mit dem Destraktionsmittel geflutet wird.

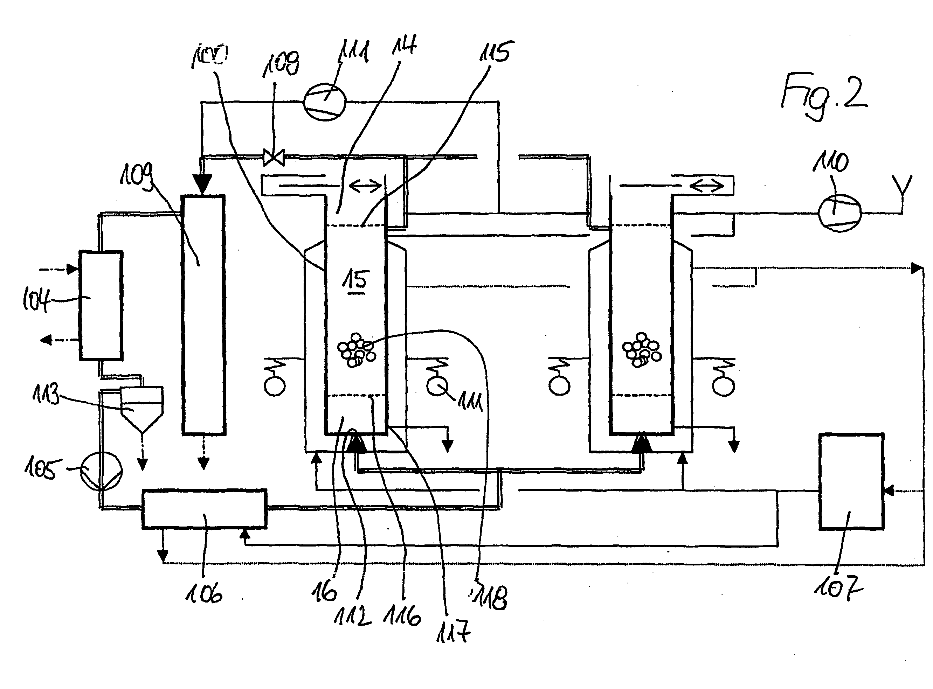

Das in Figur 2 dargestellte Ausführungsbeispiel unterscheidet sich von dem zu Figur 1 beschriebenen Ausführungsbeispiel dadurch, daß in den Behältern 100 noch gesonderte Einbauten vorhanden sind, um beispielsweise Schüttgüter aufarbeiten zu können, die am oberen Ende des Behälters 100 aufgegeben und im Gegenstrom durch den Behälter 100 geführt und an einer am unteren Ende des Behälters ausgebildeten Abzugsöffnung 117 entnommen werden. Hierzu ist in jeden Behälter 100 ein oberer Siebboden 115 eingezogen, auf dem sich die über die Einsatzöffnung 102 eingegebenen Schüttgüter verteilen, so daß eine Vergleichmäßigung der Schüttgüteraufgabe erfolgt. Der obere Siebboden ist mit Abstand zu der oberen Behälterwandung angeordnet, so daß sich eine Verteilzone 14 einstellt. Am unteren Ende des Behälters 100 ist ebenfalls mit Abstand zur unteren Behälterwandung ein unterer Siebboden 116 eingezogen, so daß sich am unteren Ende aufgrund der dort befindlichen Einströmöffnung 112 eine Einströmzone 16 ausbildet. Zwischen dem oberen Siebboden 115 und dem unteren Siebboden 116 ergibt sich eine Trennzone 15, in der sich eine Packlage von Pallringen 21 als Aufschlußkörper in loser, ungeregelmäßiger Packung befindet. Die Pallringe können beispielsweise eine Länge von 15 mm bei einem Durchmesser von ebenfalls 15 mm aufweisen.

Werden in den so ausgebildeten Behälter 100 Schüttgüter eingegeben, so verteilen sich diese zunächst auf dem oberen Siebboden 115 und treten durch dessen Öfnungen in die Trennzone 15 ein. In der Trennzone werden die Schüttgüter an den in der Packlage befindlichen Pallringen 21 aufgeschlossen, womit sich eine ausreichende Kontaktfläche mit dem im Gegenstrom über die Einströmzone 16 zugeführten Destraktionsmittel ergibt.

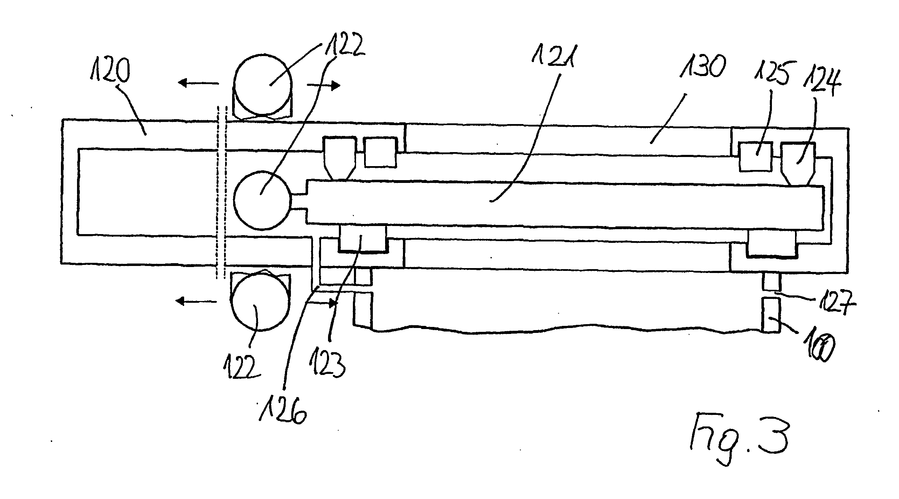

Soweit im Hinblick auf eine chargenweise Zufuhr des Materials ein entsprechender Verschluß 103 an den Behältern 100 vorgesehen sein muß, zeigt Figur 3 ein Ausführungsbeispiel eines derartigen, als Schieberverschluß ausgebildeten Verschlusses. Hierzu befindet sich auf dem Behälter 100 und dessen Einsatzöffnung 102 überdeckend ein druckfestes Schiebergehäuse 120 mit einer Aufgabeöffnung 130, in welchem eine Schieberplatte 121 über einen Antrieb 122 beweglich angeordnet ist. Dieser Antrieb ist vorzugsweise als Magnetantrieb ausgebildet, wobei jedoch auch ein elektro-hydraulischer oder ein elektropneumatischer Antrieb eingesetzt sein kann. Die Schieberplatte ruht auf Gleitlagern 123. Auf ihrer der Einsatzöffnung 102 abgewandten Seite liegt bei der in Figur 3 dargestellten Betriebsstellung die Schieberplatte 121 gegen eine Blähdichtung 124 an, neben der eine Betriebsdichtung 125 angeordnet ist. Über einen Verbindungskanal 126 wird eine Verbindung zwischen dem druckfesten Gehäuse 120 und dem Inneren des Behälters 100 hergestellt. In Figur 3 ist zudem die Öffnung 127 für den Anschluß der Evakuierungs- bzw. Flutungsleitung dargestellt.

Während der Aufarbeitung des im Behälter 100 befindlichen Materials liegt die Schieberplatte 121 zunächst an der Betriebsdichtung 125 an. Soll der Behälter 100 mit dem Ziel der Zuführung einer neuen Materialcharge geöffnet werden, so wird der Druck des Destraktionsmittels im Behälter 100 wie auch wegen des Verbindungskanals 126 im Schiebergehäuse 120 abgesenkt, so daß sich die Schieberplatte 121 auf den Gleitlagern 123 auflagert; dabei übernimmt die Blähdichtung 124 die Abdichtung des Schiebergehäuses 120 wie auch des Behälters 100 gegen den Atmosphärendruck. Im Anschluß daran werden der Behälter 100 wie auch das Schiebergehäuse 120 über den Anschluß 127 bis zum Druckausgleich mit der Atmosphäre geflutet; die Blähdichtung 124 wird entspannt, und es kann die Schieberplatte 121 mittels des Antriebes 122 in die Offen-Stellung gefahren werden. Nach dem Einbringen des Materials über die Aufgabeöffnung 130 wird die Schieberplatte 120 in die in Figur 3 dargestellte Geschlossen-Stellung gefahren, und es wird die Blähdichtung 124 durch Aufblähung gegen die Schieberplatte 121 gedrückt. Über den Anschluß 127 wird die Luft vollständig aus dem Behälter 100 wie auch aus dem Schiebergehäuse 120 evakuiert, wonach durch Einleitung des unter Druck stehenden Destraktionsmittels ein Betriebsüberdruck im Behälter 100 aufgebaut wird, der die Schieberplatte 121 gegen die Betriebsdichtung 125 preßt; die Blähdichtung 124 kann entspannt werden, und es kann der Destraktionsvorgang beginnen.

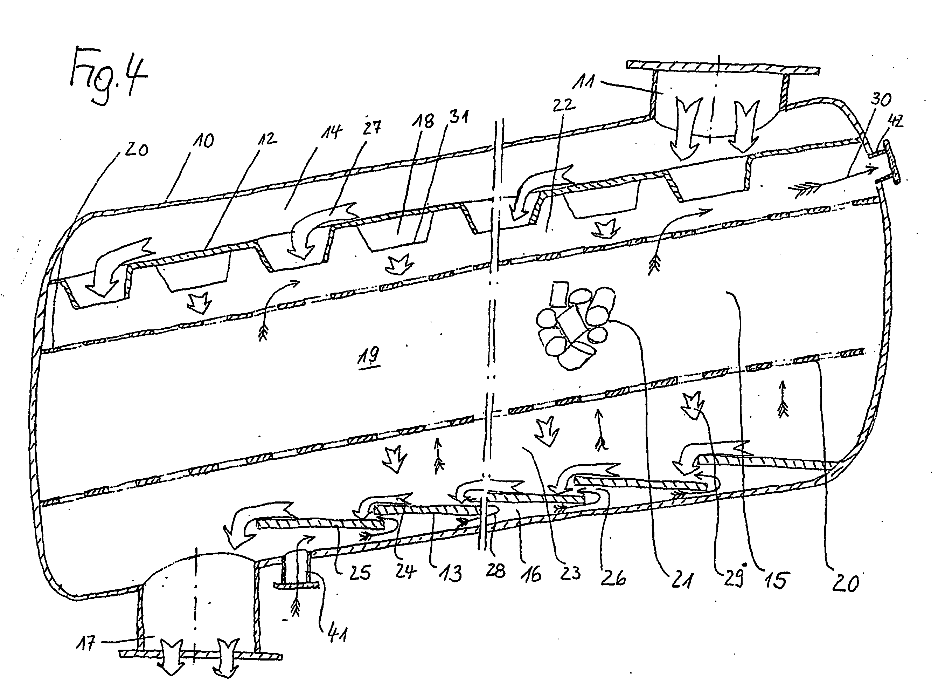

Der in Figur 4 dargestellte und mit besonderen Einbauten versehene Behälter 10 ist für die Aufarbeitung insbesondere von Walzschlämmen eingerichtet. Hierzu ist der Behälter 10 geneigt angeordnet und mit einem nicht dargestellten Antrieb gekoppelt, der den Behälter als Mikrovibrationsrinne arbeiten läßt; die Amplitude und die Frequenz hinsichtlich der einzustellenden Wurfbewegung ist in Abhängigkeit von der Beschaffenheit des Walzschlammes im Einzelfall festzulegen. Am oberen Ende des Behälters befindet sich eine Einfüllöffnung 11 für den aufzuarbeitenden Walzschlamm, während am unteren Ende des Behälters 10 eine Abzugsöffnung 17 für den hier abzuziehenden trockenen Feinzunder angeordnet ist.

Wie sich weiter aus Fig. 4 ergibt, ist in Übereinstimmung mit Figur 2 der Querschnitt des Behälters 10 jeweils durch eine in den Querschnitt eingesetzte Verteilplatte 12 sowie eine eingesetzte Austragsplatte 13 in unterschiedliche Zonen unterteilt. Zwischen der oberen Behälterwandung des Behälters 10 und der Verteilplatte 12 befindet sich eine Verteilzone 14, die an die Einfüllöffnung 11 angeschlossen ist, so daß sich der über die Einfüllöffnung 11 eingebrachte Walzschlamm aufgrund der Vibrationsbewegung des Behälters 10 mit einer gleichmäßigen Schichtdicke auf der Verteilplatte 12 verteilt.

Mit Abstand zu der unteren Behälterwandung des Behälters 10 ist eine Austragsplatte 13 angeordnet, so daß sich zwischen der Verteilplatte 12 und der Austragsplatte 13 eine Trennzone 15 ergibt. Zwischen der Austragsplatte 13 und der unteren Behälterwandung ist eine Einströmzone 16 ausgebildet, in die das im Gegenstrom zur Förderrichtung des Walzschlammes eingebrachte Destraktionsmittel eingeleitet wird.

In der Trennzone 15 befindet sich eine Packlage 19, in welcher zwischen innenseitig an der Behälterwandung festgelegten Rostblechen 20 Pallringe 21 als Aufschlußkörper in loser, unregelmäßiger Packung angeordnet sind. Die Pallringe können beispielsweise eine Länge von 15 mm bei einem Durchmesser von ebenfalls 15 mm aufweisen.

In der Verteilplatte 12 sind trichterförmige Vertiefungen 18 ausgebildet, die in die Trennzone 15 hineinreichen und an deren Fuß sich Durchtrittsöffnungen 31 für den Durchtritt des Walzschlammes in die Trennzone 15 befinden.

Die Austragsplatte 13 ist durch eine Mehrzahl von in Förderrichtung des Feststoffrückstandes treppenartig parallel zueinander angeordneten Einzelplatten 25 gebildet, wobei die zwischen den Einzelplatten bestehenden lotrechten Zwischenräume Einströmöffnungen 26 für das über die Einströmzone 16 zugeführte Destraktionsmittel zur Trennzone 15 ausbilden.

Die Packlage 19 bzw. die die Packung von Pallringen 21 begrenzenden Rostbleche 20 sind jeweils mit Abstand zu der Verteilplatte 12 bzw. zu der Austragsplatte 13 angeordnet, wobei der Abstand 23 zwischen der Packlage 19 und der Austragsplatte 13 die Ausbildung einer Feststoffschicht 24 auf der Austragsplatte 13 ermöglicht, während der Abstand 22 zwischen der Packlage 19 und der Verteilplatte 12 Raum gibt für das Abströmen des mit in der Fluidphase gelösten Wasser- und Ölbestandteilen befrachteten Destraktionsmittels. Das Abströmen wird dadurch erleichtert, daß die trichterförmigen Vertiefungen 18 in der Verteilplatte 12 in in Transportrichtung des Walzschlammes gesehen mehreren hintereinander liegenden Reihen mit jeweils mehreren nebeneinander liegenden Vertiefungen angeordnet sind, wobei die in den benachbarten Reihen befindlichen Vertiefungen 18 jeweils versetzt zueinander angeordnet sind.

Wird in die derart ausgebildete Vorrichtung Walzschlamm eingegeben, so verteilt sich der Walzschlamm zunächst auf der Verteilplatte 12 und tritt durch die in der Verteilplatte 12 ausgebildeten trichterförmigen Vertiefungen 18 mit Durchtrittsöffnungen 31 in die Trennzone 15 aus (Pfeil 27). In der Trennzone wird der Walzschlamm an den in der Packlage 19 befindlichen Pallringen 21 aufgeschlossen, so daß die Oberfläche des Schlammvolumens vergrößert wird; damit ergibt sich eine ausreichende Kontaktfläche mit dem im Gegenstrom über die Einströmzone 16 und die Einströmöffnungen 26 in der Austragsplatte 13 zugeführten Destraktionsmittel (Pfeil 28), wobei in der Trennzone 15 das Destraktionsmittel die Wasser- und Ölbestandteile löst und in die Fluidphase überführt, so daß das Gemisch aus Destraktionsmittel und fluidförmigen Wasser- und Ölbestandteilen im oberen Bereich der Trennzone 15 abströmen kann (Pfeil 30). Der insoweit gereinigte Feinzunder gelangt aus der Packlage 19 in die auf der Austragsplatte 13 liegende Feststoffschicht 24 (Pfeil 29) und wird über die Vibrationsbewegung des Behälters 10 zur Austragsöffnung 17 transportiert und kann hier als Feinzunder abgezogen werden.

Als Destraktionsmittel hat sich dabei besonders n-Pentan als geeignet erwiesen.

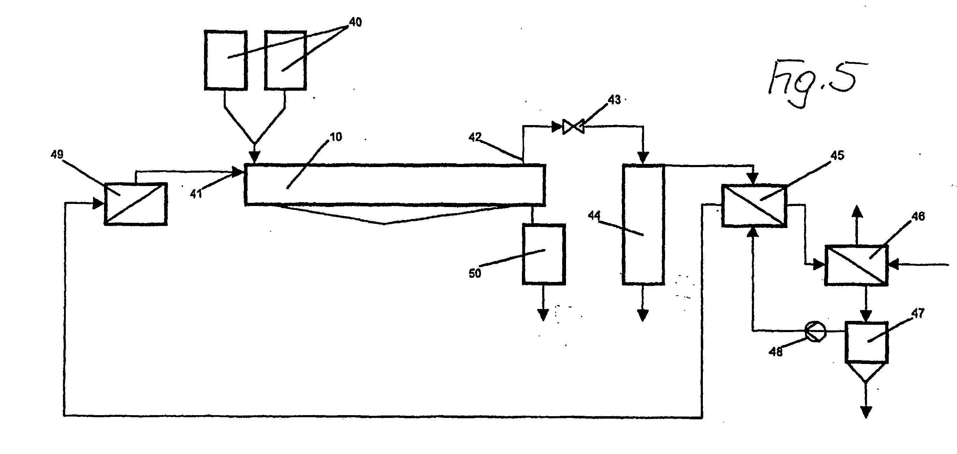

Wie sich ergänzend dazu aus Figur 5 entnehmen läßt, wird der aufzuarbeitende Walzschlamm über Aufgabegefäße 40 einem beispielsweise als Vibrationsrinne ausgeführten Behälter 10 zugeführt. Die Aufgabegefäße 40 können wechselweise beschickt und mittels eines nicht dargestellten Kompressions-, Steuer- und Ventilsystems mit einem Destraktionsmittel, beispielsweise n-Pentan, befüllt und auf den erforderlichen Destraktionsdruck gebracht werden.

In dem Behälter 10 wird der Walzschlamm intensiv mit dem über die Eintrittsöffnung 41 einströmenden Destraktionsmittel vermischt; dabei nimmt das Destraktionsmittel Wasser- und Ölbestandteile auf und verläßt den Behälter 10 als Dreistoffgemisch über den Austritt 42. Der trockene Feinzunder fließt aus dem Behälter 10 in ein Entnahmegefäß 50, welches ebenso wie die Aufgabegefäße 40 mittels eines Kompressions-, Steuer- und Ventilsystems mit Destraktionsmittel oder mit Umgebungsluft beaufschlagt werden kann, um den gereinigten Feinzunder aus dem Verfahrensprozeß in die Umgebung ausschleusen zu können.

Das aus dem Behälter 10 abgeführte, aus Destraktionsmittel, Wasser und Öl bestehende Dreistoffgemisch wird in einem Entspannungsventil 43 auf ein Druckniveau entspannt, bei welchem das destrahierte Öl und ein Teil des Wassers in einem Gas-Flüssigkeitsabscheider 44 als Flüssigkeit abgeschieden und abgezogen wird. Die in der Gasphase verbleibenden Komponenten Destraktionsmittel und Wasser werden zunächst in einem ersten Wärmeübertrager 45 gekühlt, wobei die gewonnene Wärme an das vor Rückführung in den Behälter 10 aufzuheizende Destraktionsmittel abgegeben wird. Nachfolgend werden Destraktionsmittel und Wasser in einem zweiten Wärmeübertrager 46 verflüssigt, von wo sie in einen Flüssig-Flüssig-Abscheider 47 gelangen, in welchem sich Destraktionsmittel und Wasser aufgrund ihrer Dichteunterschiede trennen. Während das Wasser einer Kläranlage zugeführt wird, wird das Destraktionsmittel mittels einer Hochdruckpumpe 48 auf den im Behälter 10 erforderlichen Druck befördert, bevor im ersten Wärmeübertrager 45 ein Teil der Prozeßwärme zugeführt wird.

Die restliche, für den Destraktionsprozeß im Behälter 10 erforderliche Wärmeenergie wird dem Destraktionsmittel in einem weiteren Wärmeübertrager 49 zugeführt, bevor das Destraktionsmittel im überkritischen Zustand über die Eintrittsöffnung 41 im Kreislauf in den Behälter 10 geführt wird.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Vorrichtung zur Abtrennung von Ölbestandteilen von als Schüttung vorliegenden Materialien wie Schüttgütern, Schrauben und Walzschlämmen, umfassend einen Behälter (100,10) mit einer oberen Einsatzöffnung (102,11) für das zu behandelnde Material, die mit einem Verschluss (103) luftdicht abschließbar ist, und mit einer am unteren Ende des Behälters (100,10) vorgesehenen Einströmöffnung (112,41) für ein im überkritischen Zustand eingeführtes Destraktionsmittel und mit Anschlüssen für die Ableitung des aus Destraktionsmittel, Wasser und Öl bestehenden Dreistoffgemisches und für die Evakuierung und/oder Flutung des Behälters (100,10) **dadurch gekennzeichnet, dass** der Behälter (100,10) mittels wenigstens eines Schwingantriebes (101) in Bewegung versetzbar und während des Einwirkens des im überkritischen Zustand zugeführten Destraktionsmittels in Bewegung zu halten ist.

2. Vorrichtung nach Anspruch 1, bei welcher zwei Behälter (100) parallel zueinander angeordnet und mit ihren zugeordneten Anschlüssen zusammengeschaltet sind.

3. Vorrichtung nach Anspruch 1, bei welcher für einen kontinuierlichen Betrieb der Behälter (100, 10) an seinem unteren Ende eine Abzugsöffnung (117, 17) für die von Ölbestandteilen befreiten Materialien aufweist.

4. Vorrichtung nach Anspruch 3, bei welcher der Querschnitt des Behälters (100) mittels eines unteren Siebbodens (116) und eines oberen Siebbodens (115) in eine zwischen der oberen Behälterwandung und dem oberen Siebboden (115) angeordnete und an die Einsatzöffnung (102) angeschlossene Verteilzone (14), eine zwischen dem oberen und dem unteren Siebboden befindliche Trennzone (15) sowie eine zwischen dem unteren Siebboden (116) und der unteren Behälterwandung eingerichtete und an die Einströmöffnung (112, 41) angeschlossene Einströmzone (16) für das im Gegenstrom zugeführte Destraktionsmittel unterteilt und in der Trennzone (15) eine mit Aufschlußkörpern (21) gefüllte Packlage (19) angeordnet ist.

5. Vorrichtung nach Anspruch 4, bei welcher die in der Packlage (19) angeordneten Aufschlußkörper (21) aus Pallringen bestehen.

6. Vorrichtung nach Anspruch 5, bei welcher die Pallringe eine axiale Länge von 15 Millimeter bei einem Durchmesser von 15 Millimeter aufweisen.

7. Vorrichtung nach einem der Ansprüche 4 bis 6, bei welcher der Behälter (10) geneigt angeordnet und die Einsatzöffnung (11) an seinem oberen Ende und die Abzugsöffnung (17) an seinem unteren Ende angeordnet sind.

8. Vorrichtung nach Anspruch 7, bei welcher die in dem als Verteilplatte (12) ausgebildeten oberen Siebboden angeordneten Durchtrittsöffnungen (31) für das zu behandelnde Material am Fuße von in die Verteilplatte (12) eingebrachten trichterförmig in die Trennzone (15) reichenden Vertiefungen (18) ausgebildet sind.

9. Vorrichtung nach Anspruch 8, bei welcher über die Länge der Verteilzone (12) eine Mehrzahl von in Strömungsrichtung des Materials hintereinanderliegenden Reihen mit jeweils mehreren nebeneinander angeordneten Vertiefungen (18) ausgebildet ist, wobei die in benachbarten Reihen befindlichen Vertiefungen (18) jeweils versetzt zueinander angeordnet sind.

10. Vorrichtung nach einem der Ansprüche 7 bis 9, bei welcher der als Austragsplatte (13) ausgebildete untere Siebboden aus treppenartig parallel zueinander in Förderrichtung des Materials angeordneten Einzelplatten (25) gebildet ist und die Einströmöffnungen (26) für das Destraktionsmittel durch die lotrechten Zwischenräume zwischen den Einzelplatten (25) gebildet sind.

11. Vorrichtung nach einem der Ansprüche 7 bis 10, bei welcher der Behälter (10) als Vibrationsrinne ausgebildet ist.

12. Vorrichtung nach einem der Ansprüche 1 bis 11, bei welcher der die obere Einsatzöffnung (102) des Behälters (100) abschließende Verschluß (103) als luftdicht abdichtender Schieberverschluß ausgebildet ist.

13. Vorrichtung nach Anspruch 12, bei welcher in einem auf den Behälter (100) aufgesetzten Schiebergehäuse (120) eine mittels eines Antriebes (122) verschiebbare Schieberplatte (121) geführt ist.

14. Vorrichtung nach Anspruch 12 oder 13, bei welcher die Schieberplatte (121) in dem Schiebergehäuse (120) senkrecht zu ihrer Verschieberichtung beweglich angeordnet ist.

15. Vorrichtung nach Anspruch 14, bei welcher an ihrer der Einsatzöffnung (102) abgewandten Fläche die Schieberplatte (121) mittels einer Blähdichtung (124) gegen das Schiebergehäuse (120) abdichtbar ist.

16. Vorrichtung nach Anspruch 15, bei welcher parallel zur Blähdichtung (124) eine Betriebsdichtung (125) angeordnet ist.

17. Vorrichtung nach einem der Ansprüche 12 bis 16, bei welcher der Behälter (100) und das Schiebergehäuse (120) über eine Leitungsverbindung (126) miteinander verbunden sind.

18. Vorrichtung nach einem der Ansprüche 1 bis 17, bei welcher das in den Behälter eingeleitete Destraktionsmittel n-Pentan ist.

19. Vorrichtung nach einem der Ansprüche 1 bis 17, bei welcher das in den Behälter eingebracht Destraktionsmittel Propan ist.

20. Vorrichtung nach einem der Ansprüche 1 bis 17, bei welcher das in den Behälter eingebrachte Destraktionsmittel Ethan ist.

## Claims

1. Apparatus for separating oil constituents from materials arising as rubbish, such as debris, screws and mill sludge, comprising a container (100, 10) having an upper charging opening (102, 11) for the material to be treated, which charging opening is hermetically sealable by means of a closure (103), and having an admission opening (112, 41) provided at the bottom end of the container (100, 10) for a distraction agent introduced in the supercritical state, and having ports for the removal of the ternary mixture of distraction agent, water and oil and for the evacuation and/or flooding of the container (100, 10), **characterized in that** the container (100, 10) is settable in motion by means of at least one vibratory mechanism (101) and kept in motion during the action of the distraction agent supplied in the supercritical state.

2. Apparatus according to claim 1, in which two containers (100) are disposed parallel to one another and interconnected by their associated ports.

3. Apparatus according to claim 1, in which for continuous operation the container (100, 10) comprises at its bottom end an outlet opening (117, 17) for the materials liberated from oil constituents.

4. Apparatus according to claim 3, in which the cross section of the container (100) is subdivided by means of a lower screen deck (116) and an upper screen deck (115) into a distribution zone (14), which is disposed between the top container wall and the upper screen deck (115) and connected to the charging opening (102), a separation zone (15), which is situated between the upper and the lower screen deck, and an admission zone (16) for the countercurrently supplied distraction agent, which is disposed between the lower screen deck (116) and the bottom container wall and connected to the admission opening (112, 41), and there is disposed in the separation zone (15) a packing layer (19) filled with digestion bodies (21).

5. Apparatus according to claim 4, in which the digestion bodies (21) disposed in the packing layer (19) comprise Pall rings.

6. Apparatus according to claim 5, in which the Pall rings have an axial length of 15 millimetres and a diameter of 15 millimetres.

7. Apparatus according to one of claims 4 to 6, in which the container (10) is disposed in an inclined manner and the charging opening (11) is disposed at its top end and the outlet opening (17) at its bottom end.

8. Apparatus according to claim 7, in which the through-openings (31) for the material to be treated, which are disposed in the upper screen deck designed as a distributor plate (12), are formed at the foot of recesses (18) introduced into the distributor plate (12) and extending in a funnel-like manner into the separation zone (15).

9. Apparatus according to claim 8, in which a plurality of, in flow direction of the material, successive rows each comprising a plurality of juxtaposed recesses (18) are formed over the length of the distribution zone (12), wherein the recesses (18) situated in adjacent rows are arranged in each case offset relative to one another.

10. Apparatus according to one of claims 7 to 9, in which the lower screen deck designed as a discharge plate (13) is formed from individual plates (25), which are disposed in a step-like manner parallel to one another in feed direction of the material, and the admission openings (26) for the distraction agent are formed by the vertical gaps between the individual plates (25).

11. Apparatus according to one of claims 7 to 10, in which the container (10) is designed as a vibratory channel.

12. Apparatus according to one of claims 1 to 11, in which the closure (103) sealing the upper charging opening (102) of the container (100) is designed as a hermetically sealing slide closure.

13. Apparatus according to claim 12, in which a slide plate (121), which is displaceable by means of a drive (122), is guided in a slide housing (120) mounted onto the container (100).

14. Apparatus according to claim 12 or 13, in which the slide plate (121) is disposed in the slide housing (120) so as to be movable at right angles to its direction of displacement.

15. Apparatus according to claim 14, in which the slide plate (121) at its surface remote from the charging opening (102) is sealable against the slide housing (120) by means of an expanding seal (124).

16. Apparatus according to claim 15, in which an operating seal (125) is disposed parallel to the expanding seal (124).

17. Apparatus according to one of claims 12 to 16, in which the container (100) and the slide housing (120) are connected to one another by a line connection (126).

18. Apparatus according to one of claims 1 to 17, in which the distraction agent introduced into the container is n-pentane.

19. Apparatus according to one of claims 1 to 17, in which the distraction agent introduced into the container is propane.

20. Apparatus according to one of claims 1 to 17, in which the distraction agent introduced into the container is ethane.

## Revendications

1. Dispositif pour séparer des particules d'huiles de matériaux présents en vrac tels que produits en vrac, vis, et boues de laminoirs, comprenant un conteneur (100, 10) muni d'une ouverture de chargement (102, 11) supérieure pour le matériau à traiter, laquelle peut être verrouillée par une fermeture (103) de manière à être étanche à l'air, et comportant une ouverture d'admission (112, 41) prévue à l'extrémité inférieure du conteneur (100, 10) pour un agent d'extraction introduit dans un état supercritique et comprenant des raccords pour le rejet du mélange de trois matières à savoir l'agent d'extraction, l'eau et l'huile et pour la vidange et/ou le remplissage du conteneur (100, 10) **caractérisé en ce que** le conteneur (100, 10) peut être mis en mouvement à l'aide d'au moins un moteur à mouvements alternatifs (101) et reste en mouvement pendant l'action de l'agent d'extraction introduit dans un état supercritique.

2. Dispositif selon la revendication 1, dans lequel deux conteneurs (100) sont disposés parallèlement l'un par rapport à l'autre et raccordés entre eux au moyen de leurs raccords correspondants.

3. Dispositif selon la revendication 1, dans lequel le conteneur (100, 10) présente, pour un fonctionnement en continu, une ouverture d'extraction (117, 17) située à son extrémité inférieure pour extraire les matériaux débarrassés des particules d'huile.

4. Dispositif selon la revendication 3, dans lequel la section du conteneur (100) se subdivise, au moyen d'un fond à tamis (116) inférieur et d'un fond à tamis (115) supérieur, en une zone de répartition (14) raccordée à l'ouverture de chargement (102) et disposée entre la paroi supérieure du conteneur et le fond à tamis supérieur (115), en une zone de séparation (15) se trouvant entre le fond à tamis supérieur et le fond à tamis inférieur, ainsi qu'en une zone d'admission (16) raccordée à l'admission (112, 41) et aménagée entre le fond à tamis (116) inférieur et la paroi inférieure du conteneur, pour acheminer à contre-courant l'agent d'extraction, et dans lequel une base pierreuse (19) remplie de corps à traiter (21) est disposée dans la zone de séparation (15).

5. Dispositif selon la revendication 4, dans lequel les corps à traiter (21) disposés dans la base pierreuse (19) comprennent des anneaux de Pall.

6. Dispositif selon la revendication 5, dans lequel les anneaux de Pall présentent une longueur axiale de 15 mm avec un diamètre de 15 millimètres.

7. Dispositif selon l'une des revendications 4 à 6, dans lequel le conteneur (10) est placé de manière inclinée, l'ouverture de chargement (11) étant disposée au niveau de son extrémité supérieure et l'ouverture d'extraction (17) étant disposée au niveau de son extrémité inférieure.

8. Dispositif selon la revendication 7, dans lequel les ouvertures de passage (31) destinées au matériel à traiter, disposées dans le fond à tamis supérieur et conformées en plaque de répartition (12), sont formées à la base de creux (18) de forme conique aménagés dans la plaque de répartition (12) qui débouchent sur la zone de répartition (15).

9. Dispositif selon la revendication 8, dans lequel sont formées une multitude de rangées, disposées les unes derrières les autres, dans le sens d'écoulement des matériaux, le long d'une zone de répartition (12) comportant plusieurs creux (18) disposés les uns à côté des autres, sachant que les creux (18) se trouvant dans des rangées voisines sont disposées en quinconce.

10. Dispositif selon l'une des revendications 7 à 9, dans lequel le fond à tamis inférieur conformé en plaque d'évacuation (13) est formé de plaques individuelles (25), disposées en escalier parallèlement les unes aux autres dans le sens du déplacement du matériau, et dans lequel les ouvertures d'admission (26) pour l'agent d'extraction sont formées par les intervalles verticaux entre les plaques individuelles (25).

11. Dispositif selon l'une des revendications 7 à 10, dans lequel le conteneur (10) se présente sous la forme d'une glissière vibrante.

12. Dispositif selon l'une des revendications 1 à 11, dans lequel la fermeture (103) de l'ouverture de chargement (102) supérieure du conteneur (100) est une fermeture coulissante étanche à l'air.

13. Dispositif selon la revendication 12 dans lequel un logement (120) de coulissage disposé sur le conteneur (100) contient une plaque coulissante (121) guidée au moyen d'un actionneur (122).

14. Dispositif selon la revendication 12 ou 13, dans lequel la plaque coulissante (121) dans le logement (120) de coulissage est disposée de manière mobile, à la verticale par rapport à son sens de coulissage.

15. Dispositif selon la revendication 14, dans lequel la plaque coulissante (121) peut assurer une étanchéité sur la surface opposée à l'ouverture de chargement (102) grâce à un joint gonflant (124) qui s'appuie contre le logement (120) de coulissage.

16. Dispositif selon la revendication 15, dans lequel un joint de fonctionnement (125) est disposé parallèlement au joint gonflant (124).

17. Dispositif selon l'une des revendications 12 à 16, dans lequel le conteneur (100) et le logement (120) de coulissage sont reliés l'un à l'autre par une conduite (126).

18. Dispositif selon l'une des revendications 1 à 17, dans lequel l'agent d'extraction introduit dans le conteneur est du n-pentane.

19. Dispositif selon l'une des revendications 1 à 17, dans lequel l'agent d'extraction introduit dans le conteneur est du propane.

20. Dispositif selon l'une des revendications 1 à 17, dans lequel l'agent d'extraction introduit dans le conteneur est de l'éthane.
